# EUROPEAN PATENT APPLICATION

(11) **EP 1 780 062 A1**
(43) Date of publication of application: **02.05.2007**
(21) Application number: 06255548.7
(22) Date of filing: 27.10.2006
(51) Int. Cl.: B60J 3/06, E06B 9/24, G02B 27/28

(54) **Light blocking apparatus**

(30) Priority: 27.10.2005 JP 2005312262; 08.08.2006 JP 2006215658
(71) Applicant: NISSAN MOTOR CO., LTD., Yokohama-shi, Kanagawa 221-0023 (JP)
(72) Inventor: Tsuji, Zenyo, Yokohama-shi, Kanagawa 221-0023 (JP)
(74) Representative: Holmes, Matthew William

(57) **Abstract**

A light blocking device (1) includes a main polarizing plate unit (3) and first and second movable polarizing plates (4,5). The main polarizing plate unit (3) includes first (3A) and second (3B) polarizing sections having first and second polarization directions. The first movable polarizing plate (4) has a polarization direction that is substantially the same as the first polarization direction (3A), and is selectively movable to overlap the first (3A) and second (3B) polarizing sections of the main polarizing plate unit (3) to selectively transmit and block light through the light blocking device (1). The second movable polarizing plate (5) has a polarization direction that is substantially the same as the second polarization direction, and is selectively movable to overlap the first (3A) and second (3B) polarizing sections of the main polarizing plate unit (3) to selectively block and transmit light through the light blocking device (1).

## Description

The present invention relates to a light blocking apparatus and particularly, but not exclusively, to an apparatus configured and arranged to adjust the amount of incident light transmitted therethrough. Aspects of the invention relate to a sun visor for a vehicle and a vehicle sun roof or roof panel incorporating the apparatus. Aspects of the invention also relate to a device, to a method and to a vehicle.

Japanese Laid-Open Patent Publication No. S62-50222 discloses one example of conventional vehicle sun visors for adjusting the amount of sunlight allowed to pass into a vehicle passenger compartment. The conventional sun visor disclosed in this reference includes a movable plate and a stationary plate. Strips of two types of polarizing film are arranged alternately in prescribed intervals on each of the movable plate and the stationary plate. The polarizing directions of the two types of polarizing film are 90° out of phase. By moving the movable plate relative to the stationary plate, the width of the portions where the polarizing films (whose polarization directions are 90° out of phase) on the movable plate and the stationary plate overlap is changed, and thus, the amount of incident light allowed to pass into the passenger compartment is adjusted.

With the conventional sun visor described in the above mentioned reference, since strips of polarizing film whose polarizing directions differ by 90° are arranged alternately in prescribed intervals, the amount of light allowed to pass through the sun visor can only be adjusted across the entire surface of the stationary plate by moving the movable plate with respect to the stationary plate. However, such conventional sun visors cannot select a specific section or area of the surface of the sun visor where the light is blocked. Also such conventional sun visors cannot adjust the size of the selected area where the light is blocked.

It is an aim of the invention to improve upon such known technology. Other aims and advantages of the invention will become apparent from the following description, claims and drawings.

Aspects of the invention therefore provide an apparatus, a method and a vehicle as claimed in the appended claims.

According top another aspect of the invention there is provided a light blocking device comprising: a polarizing plate unit including a first polarizing section with a first polarization direction and a second polarizing section with a second polarization direction that is different from the first polarization direction, the first and second polarizing sections being disposed laterally with respect to each other in an alignment direction, a first movable polarizing plate movably disposed in the alignment direction to selectively overlap the first and second polarizing sections, the first movable polarizing plate having a polarization direction that is substantially identical to the first polarization direction; and a second movable polarizing plate movably disposed in the alignment direction to selectively overlap the first movable polarizing plate, the second movable polarizing plate having a polarization direction that is substantially identical to the second polarization direction.

In an embodiment, the polarization direction of the first movable polarizing plate is identical to the first polarization direction of the first polarizing section of the polarizing plate unit.

In an embodiment, the second movable polarizing plate is identical to the second polarization direction of the second polarizing section of the polarizing plate unit.

In an embodiment, the first movable polarizing plate is substantially identical in size and shape as the first polarizing section of the polarizing plate unit.

In an embodiment, the second movable polarizing plate is substantially identical in size and shape as the second polarizing section of the polarizing plate unit.

In an embodiment, the first and second polarizing sections of the polarizing plate unit are substantially identical in size and shape.

In an embodiment, the first and second movable polarizing plates are disposed on opposite sides of the polarizing plate unit.

In an embodiment, the first movable polarizing plate has a first operating lever attached thereto, and the second movable polarizing plate has a second operating lever attached thereto.

In an embodiment, the first and second movable polarizing plates are disposed on a single side of the polarizing plate unit.

In an embodiment, the first polarizing section of the polarizing plate unit has a first transparent reinforcing plate adhesively attached thereto. The second polarizing section of the polarizing plate unit may have a second transparent reinforcing plate adhesively attached thereto. The first movable polarizing plate may have a third transparent reinforcing plate adhesively attached thereto. The second movable polarizing plate may have a fourth transparent reinforcing plate adhesively attached thereto.

In an embodiment, the second and third transparent reinforcing plates are arranged such that the first movable polarizing plate and the second polarizing section of the polarizing plate unit face each other without the second and third transparent reinforcing plates being disposed therebetween. The first and fourth transparent reinforcing plates may be arranged such that the second movable polarizing plate and the first polarizing section of the polarizing plate unit face each other without the first and fourth transparent reinforcing plates being disposed therebetween.

The device may comprise a frame of a sun visor an opening with the polarizing plate unit being disposed within the opening of the frame.

The device may comprise a roof panel having a sunroof window opening disposed in a roof section of a vehicle with the polarizing plate unit being disposed within the sunroof window opening.

According to a further aspect of the invention, there is provided a light blocking device comprising: first main polarizing means for polarizing light in a first polarizing direction, second main polarizing means for polarizing light in a second polarizing direction that is different from the first polarizing direction with the second aligned polarizing means being disposed laterally with respect to the first aligned polarizing means, first movable polarizing means for selectively transmitting the light when overlapping the first main polarizing means and blocking the light when overlapping the second main polarizing means and second movable polarizing means for selectively transmitting the light when overlapping the second main polarizing means and blocking the light when overlapping the first main polarizing means while moving independently of the first movable polarizing means.

According to a still further aspect of the invention there is provided a light-blocking position selecting method comprising: providing an polarizing plate unit including a first polarizing section with a first polarization direction and a second polarizing section with a second polarization direction that is different from the first polarization direction with the first and second polarizing sections being disposed laterally with respect to each other in an alignment direction, movably disposing a first movable polarizing plate in the alignment direction to selectively overlap the first and second polarizing sections, the first movable polarizing plate having a polarization direction that is substantially identical to the first polarization direction, movably disposing a second movable polarizing plate in the alignment direction to selectively overlap the first movable polarizing plate, the second movable polarizing plate having a polarization direction that is substantially identical to the second polarization direction and changing an overlapping state of the polarizing plate unit, the first movable polarizing plate and the second movable polarizing plate by moving the first movable polarizing plate and the second movable polarizing plate.

Embodiments of the invention provide a light blocking device, a sun visor, and/or a sunroof unit in which the area where light is blocked can be selected and the size of the selected area can be adjusted.

For example, a light blocking device is provided that basically comprises a polarizing plate unit, a first movable polarizing plate and a second movable polarizing plate. The polarizing plate unit includes a first polarizing section with a first polarization direction and a second polarizing section with a second polarization direction that is different from the first polarization direction. The first and second polarizing sections are disposed laterally with respect to each other in an alignment direction. The first movable polarizing plate is movably disposed in the alignment direction to selectively overlap the first and second polarizing sections. The first movable polarizing plate has a polarization direction that is substantially identical to the first polarization direction. The second movable polarizing plate is movably disposed in the alignment direction to selectively overlap the first movable polarizing plate. The second movable polarizing plate has a polarization direction that is substantially identical to the second polarization direction.

Within the scope of this application, it is envisaged that the various aspects, embodiments and alternatives set out in the preceding paragraphs, in the claims and in the following description, may be taken individually or in any combination thereof.

The present invention will now be described, by way of example only, with reference to the accompanying drawings in which:

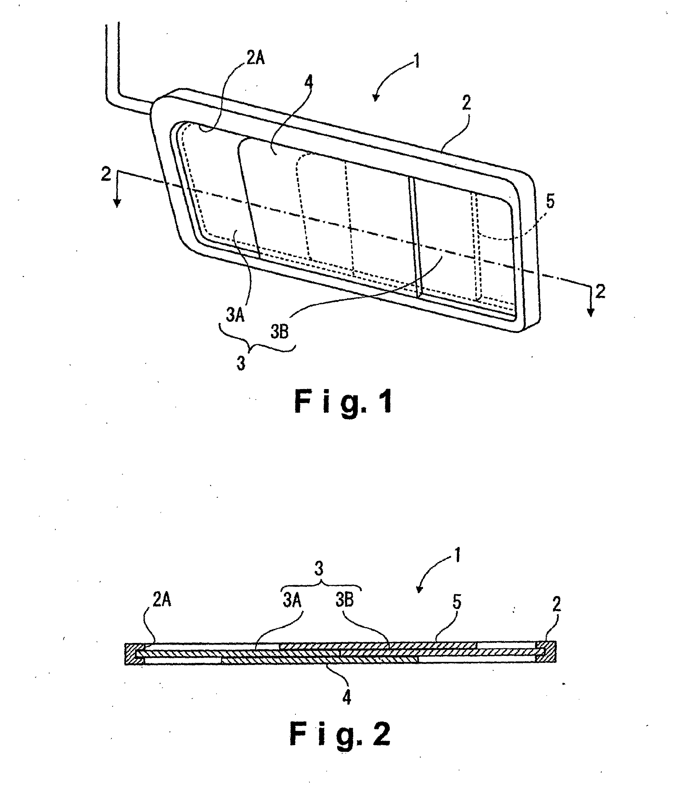

Figure 1 is a perspective view of a light blocking device in the form of a sun visor in accordance with a first embodiment of the present invention;
Figure 2 is a cross sectional view of the sun visor in accordance with the first embodiment of the present invention taken along a section line 2-2 of Figure 1;

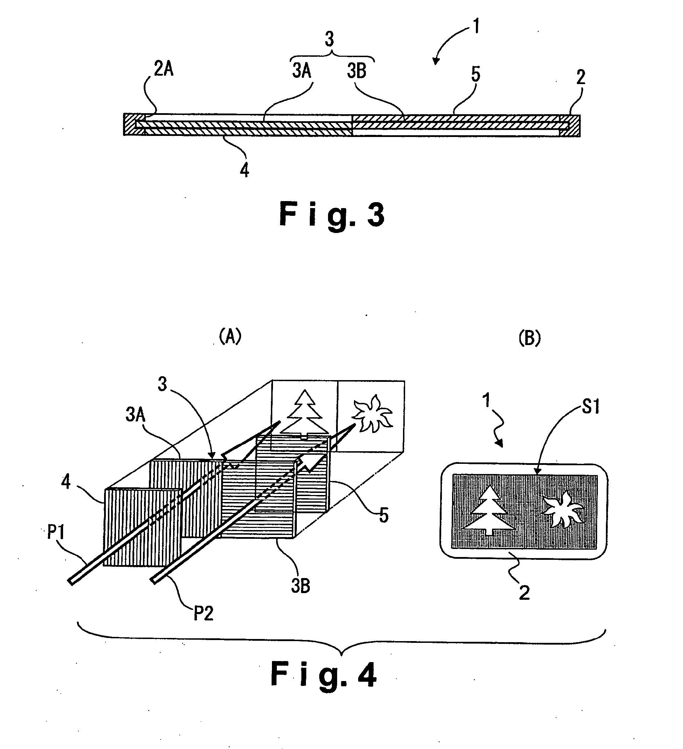

Figure 3 is a cross sectional view of the sun visor showing a positional relationship between a main polarizing plate unit and first and second movable polarizing plates of the sun visor when an entire surface of the sun visor is arranged as a light transmissive area in accordance with the first embodiment of the present invention;
Figure 4 includes a diagram (A) illustrating a schematic exploded view of the main polarizing plate unit and the first and second movable polarizing plates of the sun visor with the positional relationship as shown in Figure 3, and a diagram (B) illustrating a schematic diagram for showing the light transmissive area of the sun visor corresponding to a state of the sun visor illustrated in the diagram (A) in accordance with the first embodiment of the present invention;

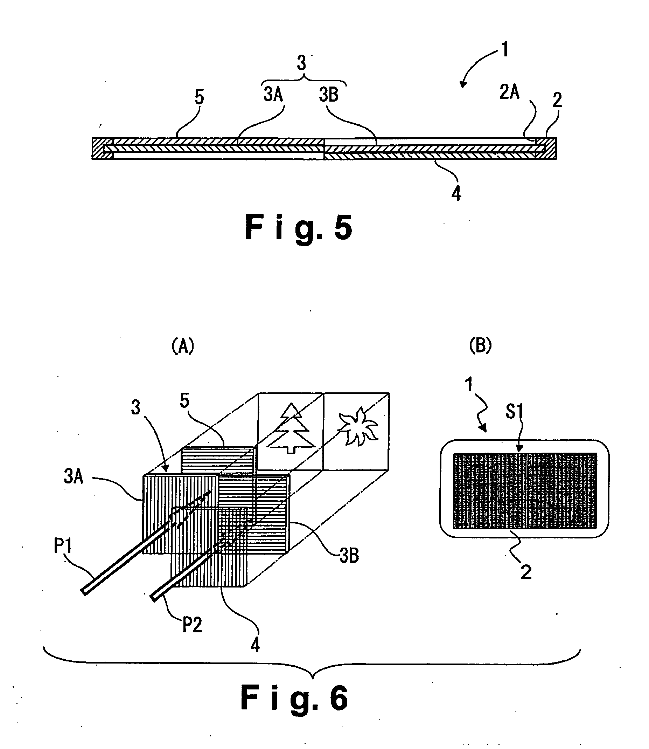

Figure 5 is a cross sectional view of the sun visor showing a positional relationship between the main polarizing plate unit and the first and second movable polarizing plates of the sun visor when the entire surface of the sun visor is arranged as a light-blocking area in accordance with the first embodiment of the present invention;
Figure 6 includes a diagram (A) illustrating a schematic exploded view of the main polarizing plate unit and the first and second movable polarizing plates of the sun visor with the positional relationship as shown in Figure 5, and a diagram (B) illustrating a schematic diagram for showing the light transmissive state of the sun visor corresponding to a state of the sun visor illustrated in the diagram (A) in accordance with the first embodiment of the present invention;

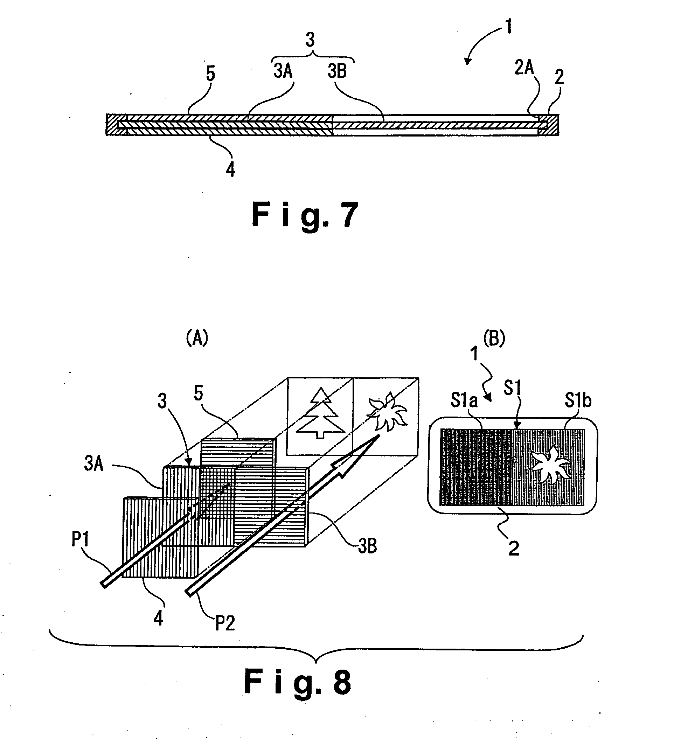

Figure 7 is a cross sectional view of the sun visor showing a positional relationship between the main polarizing plate unit and the first and second movable polarizing plates of the sun visor when a left half of the surface of the sun visor is arranged as a light-blocking area in accordance with the first embodiment of the present invention;
Figure 8 includes a diagram (A) illustrating a schematic exploded view of the main polarizing plate unit and the first and second movable polarizing plates of the sun visor with the positional relationship as shown in Figure 7, and a diagram (B) illustrating a schematic diagram for showing the light transmissive area of the sun visor corresponding to a state of the sun visor illustrated in the diagram (A) in accordance with the first embodiment of the present invention;

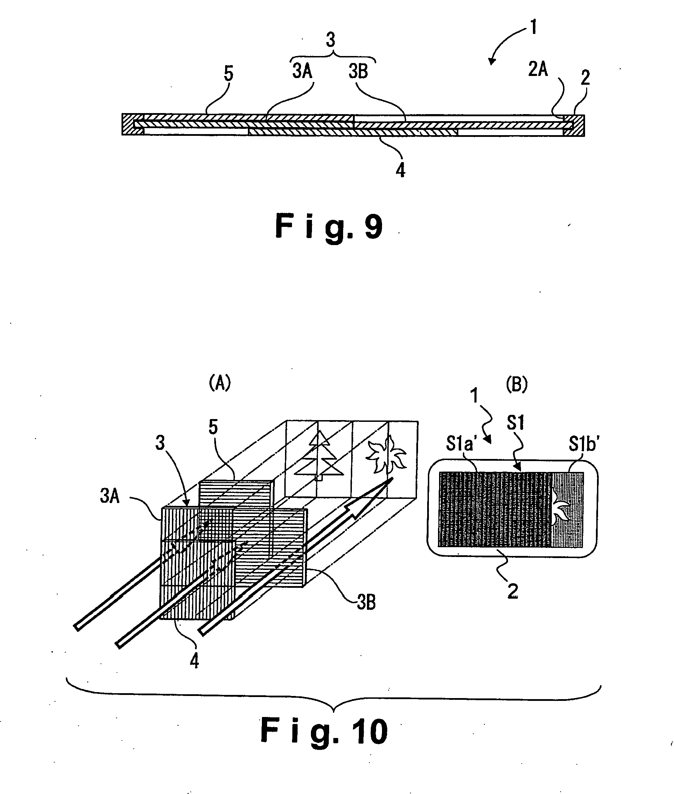

Figure 9 is a cross sectional view of the sun visor showing a positional relationship between the main polarizing plate unit and the first and second movable polarizing plates of the sun visor that is adjusted from the positional relationship shown in Figure 7 to expand the light-blocking area in accordance with the first embodiment of the present invention;
Figure 10 includes a diagram (A) illustrating a schematic exploded view of the main polarizing plate unit and the first and second movable polarizing plates of the sun visor with the positional relationship as shown in Figure 9, and a diagram (B) illustrating a schematic diagram for showing the light transmissive area of the sun visor corresponding to a state of the sun visor illustrated in the diagram (A) in accordance with the first embodiment of the present invention;

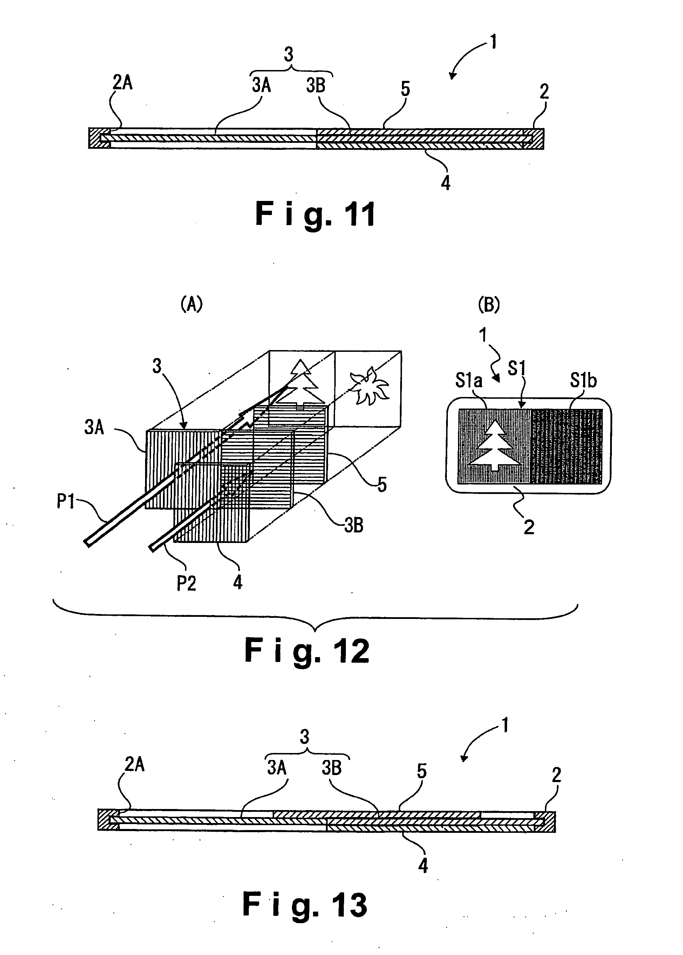

Figure 11 is a cross sectional view of the sun visor showing a positional relationship between the main polarizing plate unit and the first and second movable polarizing plates when a right half of the surface of the sun visor is arranged as a light-blocking area in accordance with the first embodiment of the present invention;
Figure 12 includes a diagram (A) illustrating a schematic exploded view of the main polarizing plate unit and the first and second movable polarizing plates of the sun visor with the positional relationship as shown in Figure 11, and a diagram (B) illustrating a schematic diagram for showing the light transmissive area of the sun visor corresponding to a state of the sun visor illustrated in the diagram (A) in accordance with the first embodiment of the present invention;
Figure 13 is a cross sectional view of the sun visor showing a positional relationship between the main polarizing plate unit and the first and second movable polarizing plates that is adjusted from the positional relationship shown in Figure 11 to expand the light-blocking area in accordance with the first embodiment of the present invention;

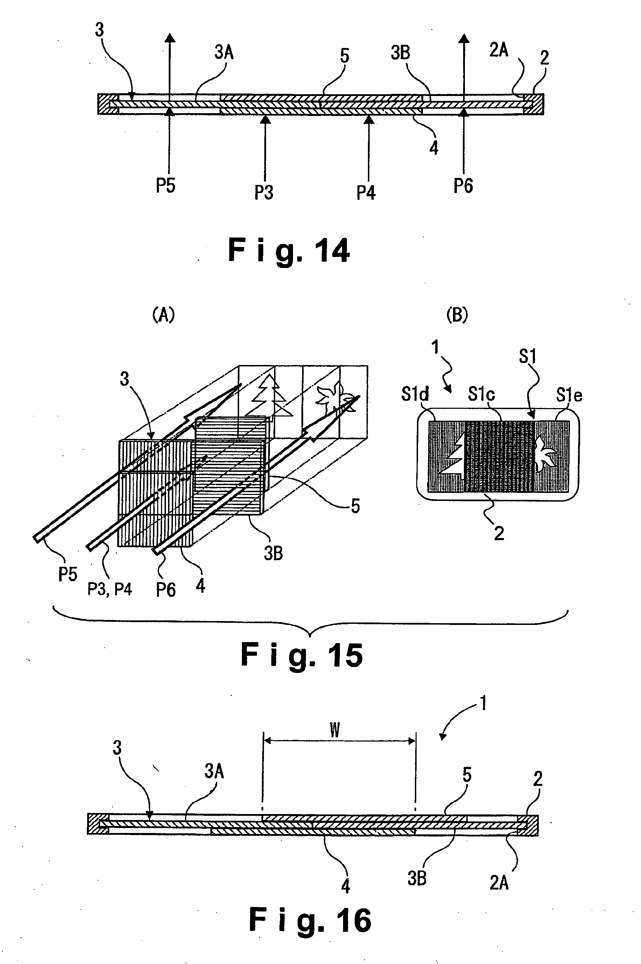

Figure 14 is a cross sectional view of the sun visor showing a positional relationship between the main polarizing plate unit and the first and second movable polarizing plates when a middle portion of the sun visor is arranged as a light-blocking area in accordance with the first embodiment of the present invention;
Figure 15 includes a diagram (A) illustrating a schematic exploded view of the main polarizing plate unit and the first and second movable polarizing plates of the sun visor with the positional relationship as shown in Figure 14, and a diagram (B) illustrating a schematic diagram for showing the light transmissive area of the sun visor corresponding to a state of the sun visor illustrated in the diagram (A) in accordance with the first embodiment of the present invention;
Figure 16 is a cross sectional view of the sun visor showing a positional relationship between the main polarizing plate unit and the first and second movable polarizing plates that is adjusted from the positional relationship shown in Figure 14 to change the light-blocking area in accordance with the first embodiment of the present invention;

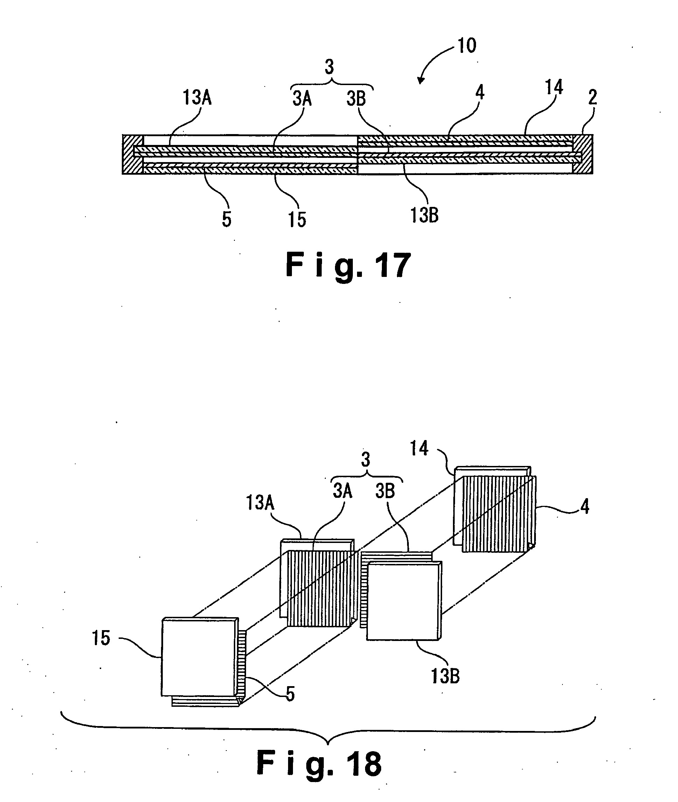

Figure 17 is a cross sectional view of a sun visor in accordance with a modified structure of the first embodiment of the present invention;
Figure 18 is a schematic exploded view of first and second movable polarizing plates, a main polarizing plate unit, and a plurality of reinforcing plates of the sun visor illustrated in Figure 17 in accordance with the modified structure of the first embodiment of the present invention;

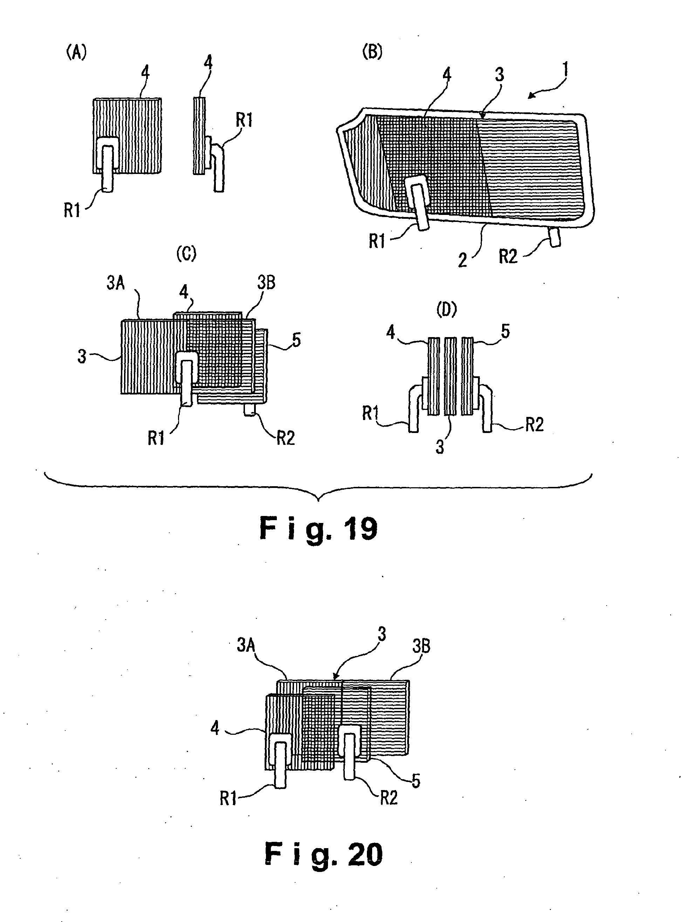

Figure 19 is a series of diagrams (A) to (D) wherein the diagram (A) is a diagrammatic view of an operating lever attached to the first movable polarizing plate, the diagram (B) is a diagrammatic view of the sun visor having the operating levers provided on the first and second movable polarizing plates, the diagram (C) is a schematic view of the first and second movable polarizing plates with the operating levers and the main polarizing plate unit, and the diagram (D) is a side view of the first and second movable polarizing plates with the operating levers and the main polarizing plate unit in accordance with the first embodiment of the present invention;
Figure 20 is a schematic view of a sun visor illustrating an arrangement of the first and second movable polarizing plates in accordance with a comparison example that is problematic when operating levers are provided;

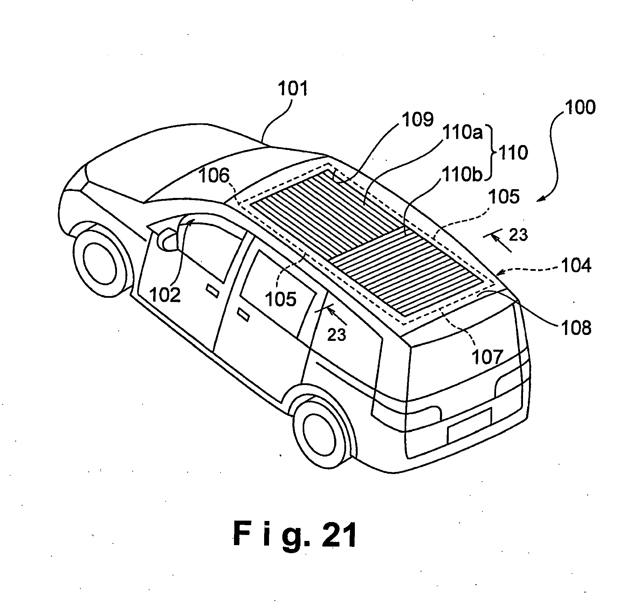

Figure 21 is a schematic rear perspective view of a vehicle equipped with a light blocking device in the form of a sunroof unit in accordance with a second embodiment of the present invention;

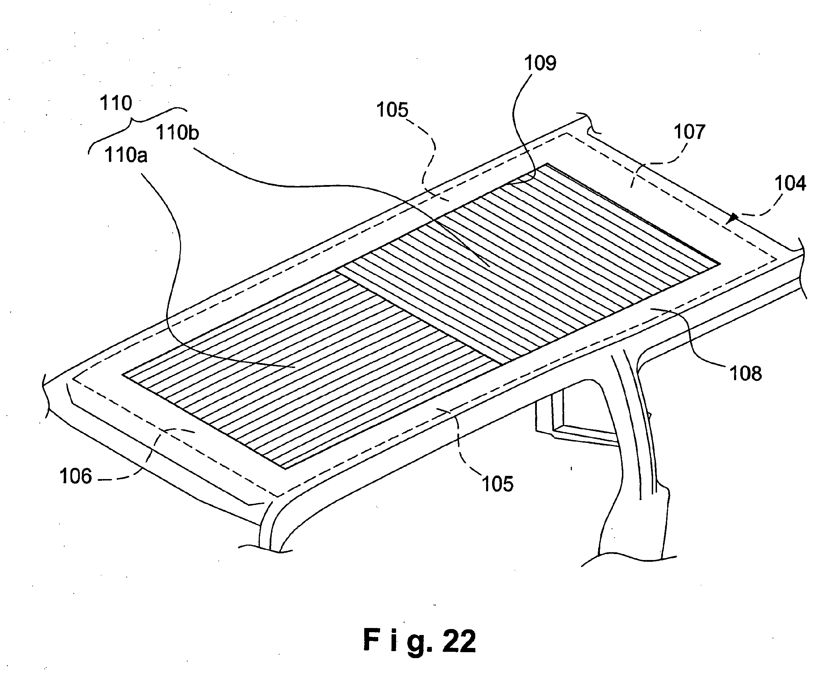

Figure 22 is a schematic front perspective view of a roof portion of a vehicle body shown in Figure 21 illustrating a main polarizing window plate unit and a portion of the vehicle body in accordance with the second embodiment of the present invention;

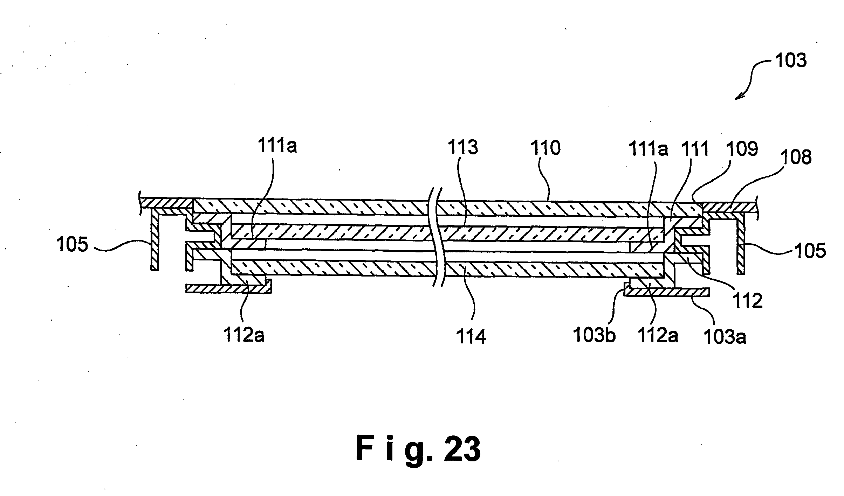

Figure 23 is a cross sectional view of the roof portion of the vehicle taken along a section line 23-23 of Figure 21 in accordance with the second embodiment of the present invention;

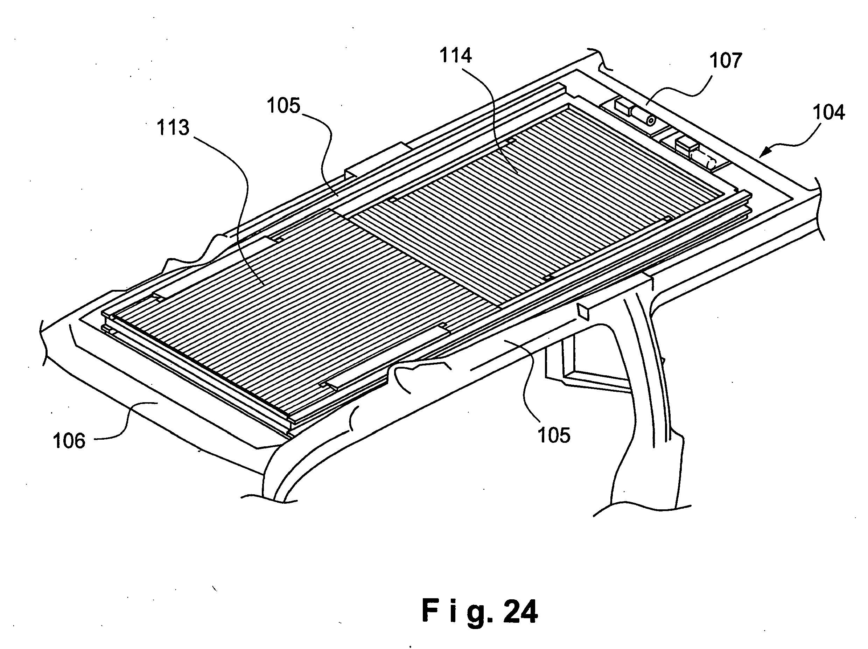

Figure 24 is a schematic front perspective view of the roof portion of the vehicle body shown in Figures 21 and 22 in a state in which a roof panel and the main polarizing window plate unit are removed in accordance with the second embodiment of the present invention;

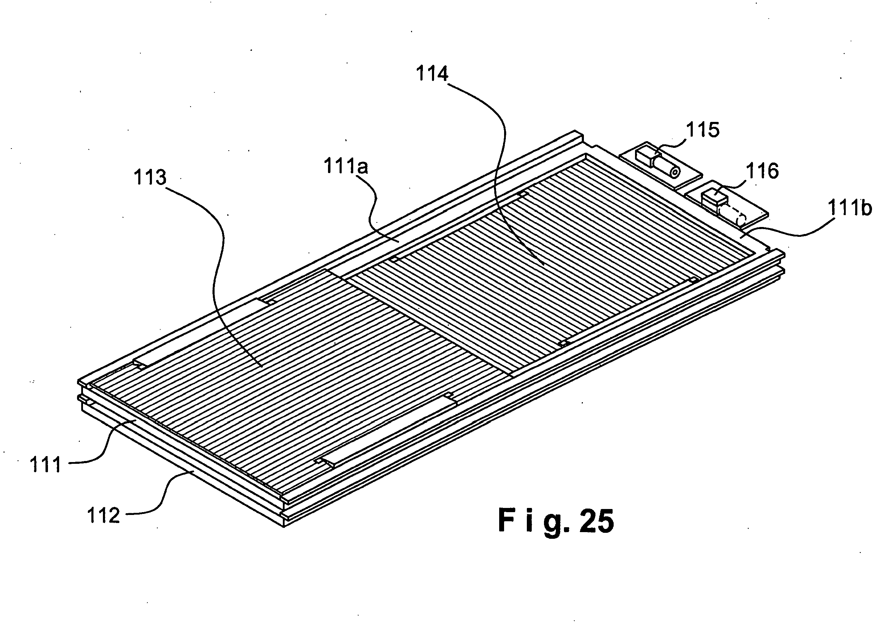

Figure 25 is a schematic front perspective view of first and second rail frames and the first and second movable polarizing window plates of the sunroof unit in accordance with the second embodiment of the present invention;

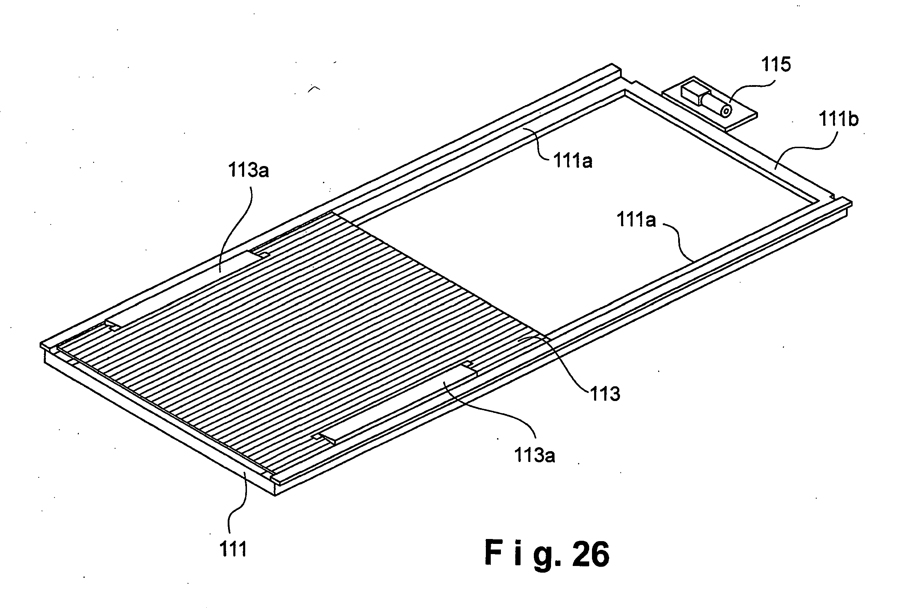

Figure 26 is a schematic front perspective view of the first movable polarizing window plate and the first (top) rail frame in accordance with the second embodiment of the present invention;

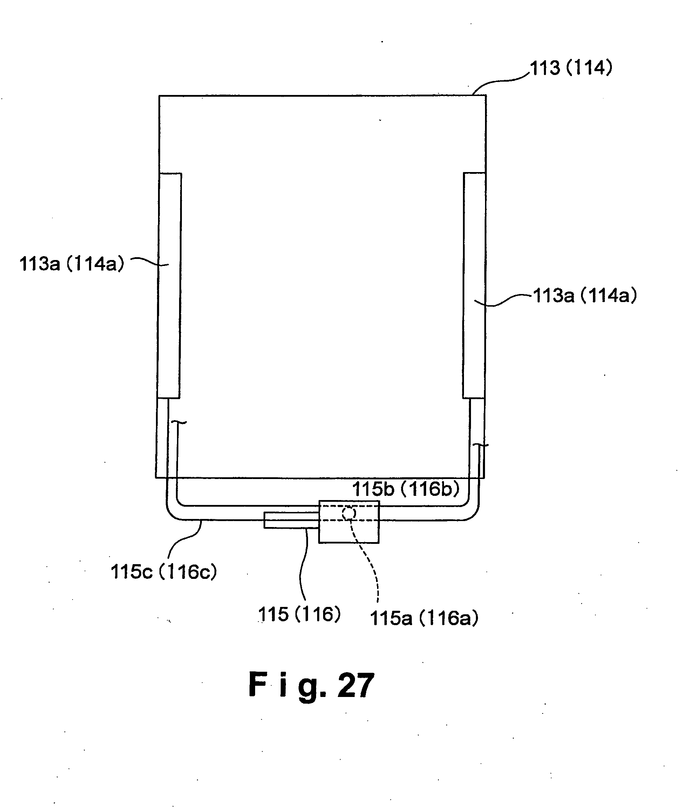

Figure 27 is a schematic top plan view illustrating a relationship between a drive motor and the movable polarizing window plate in accordance with the second embodiment of the present invention;

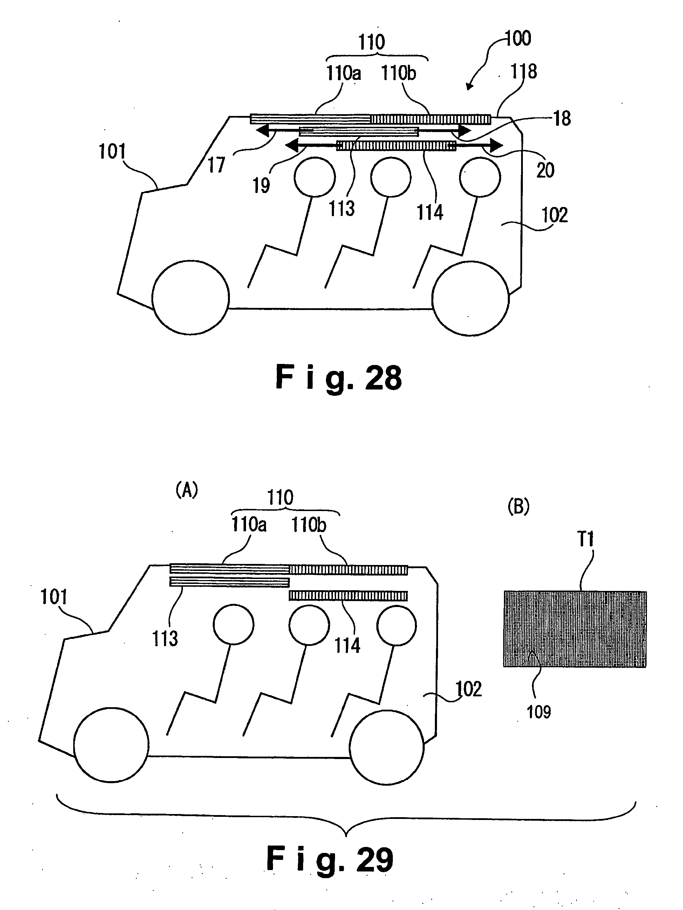

Figure 28 is a schematic diagram of the vehicle for illustrating forward and backward movements of the first and second movable polarizing window plates with respect to the polarizing window plate in accordance with the second embodiment of the present invention;
Figure 29 includes a diagram (A) illustrating a schematic diagram of the vehicle with a positional relationship of the first and second movable polarizing window plates with respect to the main polarizing window plate unit when an entire area of the sunroof window opening is arranged as a light transmissive area, and a diagram (B) for showing the light transmissive area of the sunroof window opening corresponding to a state of the sunroof unit illustrated in the diagram (A) in accordance with the second embodiment of the present invention;

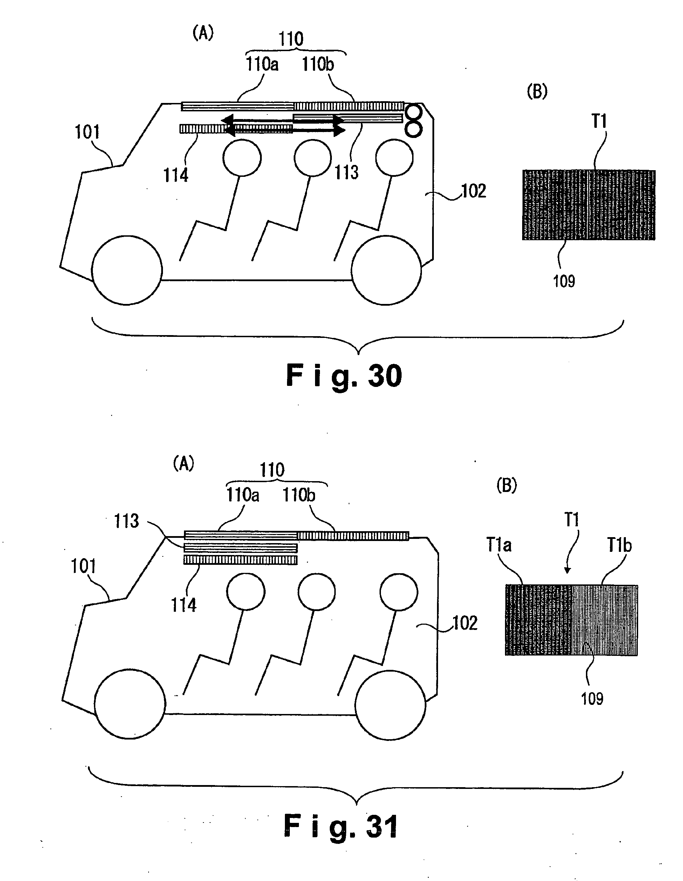

Figure 30 includes a diagram (A) illustrating a schematic diagram of the vehicle with a positional relationship of the first and second movable polarizing window plates with respect to the main polarizing window plate unit when the entire area of the sunroof window opening is arranged as a light-blocking area, and a diagram (B) for showing the light transmissive area of the sunroof window opening corresponding to a state of the sunroof unit illustrated in the diagram (A) in accordance with the second embodiment of the present invention;
Figure 31 includes a diagram (A) illustrating a schematic diagram of the vehicle with a positional relationship of the first and second movable polarizing window plates with respect to the main polarizing window plate unit when a frontward portion of the area of the sunroof window opening is arranged as a light-blocking area, and a diagram (B) for showing the light transmissive area of the sunroof window opening corresponding to a state of the sunroof unit illustrated in the diagram (A) in accordance with the second embodiment of the present invention;

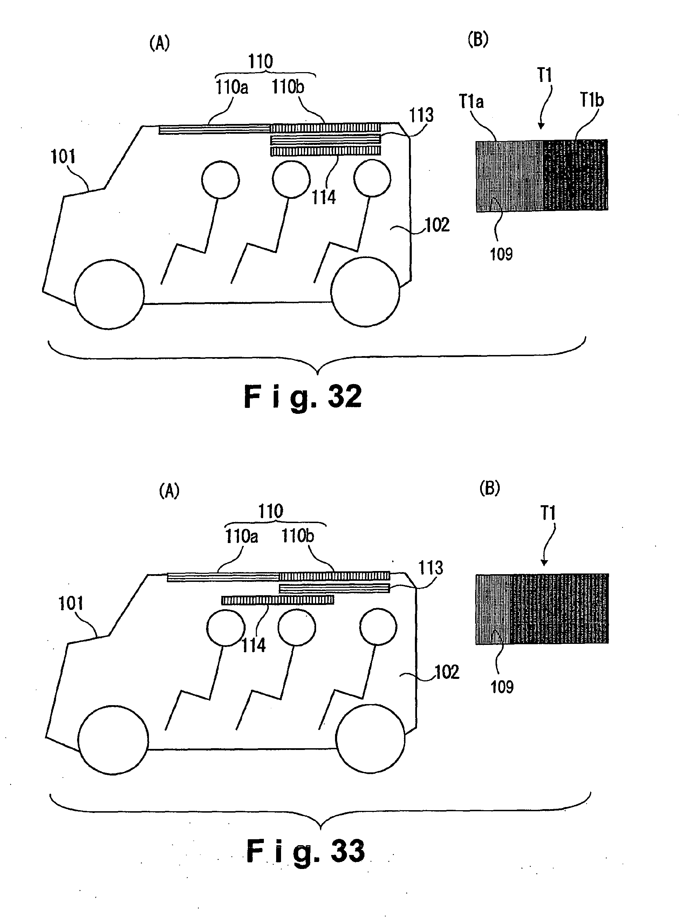

Figure 32 includes a diagram (A) illustrating a schematic diagram of the vehicle with a positional relationship of the first and second movable polarizing window plates with respect to the main polarizing window plate unit when a rearward portion of the area of the sunroof window opening is arranged as a light-blocking area, and a diagram (B) for showing the light transmissive area of the sunroof window opening corresponding to a state of the sunroof unit illustrated in the diagram (A) in accordance with the second embodiment of the present invention;
Figure 33 includes a diagram (A) illustrating a schematic diagram of the vehicle with a positional relationship of the first and second movable polarizing window plates with respect to the main polarizing window plate unit that is adjusted from the positional relationship illustrated in Figure 32 to expand the light-blocking area, and a diagram (B) for showing the light transmissive area of the sunroof window opening corresponding to a state of the sunroof unit illustrated in the diagram (A) in accordance with the second embodiment of the present invention;

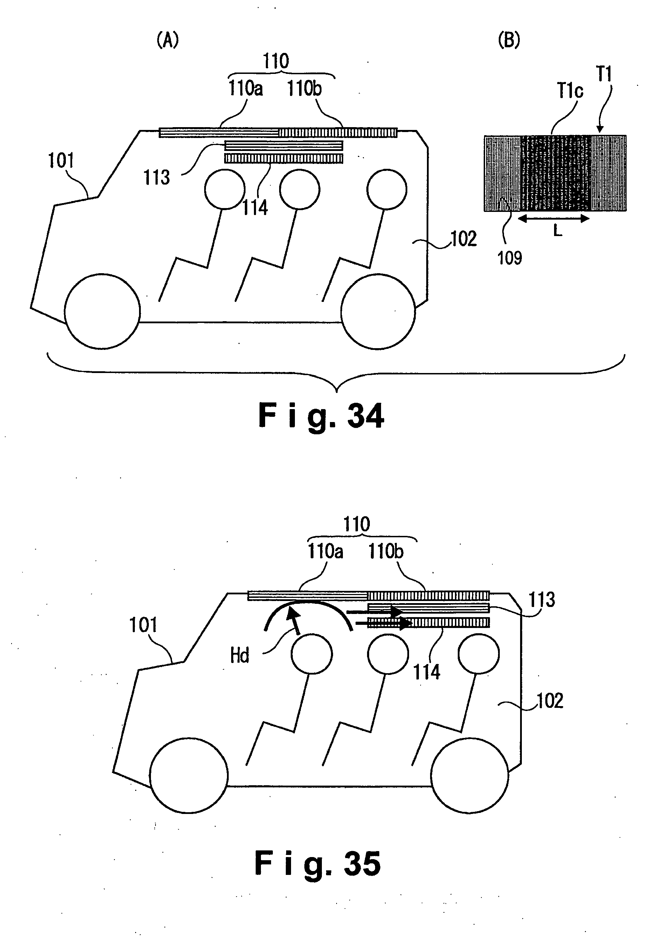

Figure 34 includes a diagram (A) illustrating a schematic diagram of the vehicle with a positional relationship of the first and second movable polarizing window plates with respect to the main polarizing window plate unit when a middle portion of the sunroof window opening is arranged as a light-blocking area, and a diagram (B) for showing the light transmissive area of the sunroof window opening corresponding to a state of the sunroof unit illustrated in the diagram (A) in accordance with the second embodiment of the present invention; and
Figure 35 is a schematic diagram of the vehicle illustrating a head clearance of the vehicle in accordance with the second embodiment of the present invention.

Referring initially to Figures 1 and 2, a sun visor 1 is illustrated as one type of a light blocking device in accordance with a first embodiment of the present invention. While in the first embodiment, the light blocking device is applied to the sun visor 1 that is preferably installed inside of a vehicle or the like, it will be apparent to those skilled in the art from this disclosure that light blocking device of the present invention can be applied to other devices as needed and/or desired. The sun visor 1 basically includes a frame 2, a main polarizing plate unit 3, a first movable polarizing plate 4 and a second movable polarizing plate 5. The frame 2 has a generally rectangular opening 2A as shown in Figure 1. The main polarizing plate unit 3 is fixedly coupled to the frame 2 within the opening 2A. The first movable polarizing plate 4 and the second movable polarizing plate 5 are arranged substantially parallel to the main polarizing plate unit 3. Moreover, the first movable polarizing plate 4 and the second movable polarizing plate 5 are arranged in different positions along a direction perpendicular to the surface of the main polarizing plate unit 3 (i.e., the vertical direction in Figure 2) such that each of the first movable polarizing plate 4 and the second movable polarizing plate 5 can be moved independently with respect to the main polarizing plate unit 3 without interfering with each other. More specifically, in this first embodiment of the present invention, the first movable polarizing plate 4 is disposed within the opening 2A on a first side of the main polarizing plate unit 3 and the second movable polarizing plate 5 is disposed within the opening 2A on a second side of the main polarizing plate unit 3.

The main polarizing plate unit 3, the first movable polarizing plate 4, and the second movable polarizing plate 5 preferably constitute the light blocking device of the present invention.

In this first embodiment, the main polarizing plate unit 3 includes a pair of first and second polarizing sections 3A and 3B. The first and second polarizing sections 3A and 3B are arranged such that the polarization direction of the first polarizing section 3A differs from the polarization direction of the second polarizing section 3B by 90°. The first and second polarizing sections 3A and 3B are aligned to the left and right of each other (i.e., an alignment direction is a horizontal direction of the sun visor 1) with respect to the frame 2 of the sun visor 1 as seen in Figures 1 and 2.

For example, the first polarizing section 3A is arranged such that the polarization direction of the first polarizing section 3A is the vertical direction with respect to the sun visor 1 in Figure 1. Therefore, the first polarizing section 3A passes light that oscillates in the vertical direction and blocks light that oscillates in the horizontal direction. In such case, the second polarizing section 3B is arranged such that the polarization direction of the second polarizing section 3B is the horizontal direction with respect to the sun visor 1 in Figure 1. Therefore, the second polarizing section 3B passes light that oscillates in the horizontal direction and blocks light that oscillates in the vertical direction. The border between the first polarizing section 3A and the second polarizing section 3B is positioned approximately at the midpoint along the horizontal length of the main polarizing plate unit 3 as shown in Figures 1 and 2. Thus, the first polarizing section 3A and the second polarizing section 3B of the main polarizing plate unit 3 are approximately the same size and have generally the same shape.

The first movable polarizing plate 4 is mounted in the opening 2A of the frame 2 such that the first movable polarizing plate 4 can be moved horizontally (left and right direction in Figures 1 and 2) with respect to the main polarizing plate unit 3 that is fixedly coupled to the frame 2. The first movable polarizing plate 4 has approximately the same size and shape as the first polarizing section 3A of the main polarizing plate unit 3. The first movable polarizing plate 4 is configured and arranged such that the polarization direction of the first movable polarizing plate 4 is substantially the same as the polarization direction of the first polarizing section 3A of the main polarizing plate unit 3 (i.e., the vertical direction of the sun visor 1 in this example). In this embodiment, the polarization direction of the first movable polarizing plate 4 is preferably identical to the polarization direction of the first polarizing section 3A of the main polarizing plate unit 3. Thus, the first movable polarizing plate 4 passes light that oscillates in the vertical direction and blocks light that oscillates in the horizontal direction.

The second movable polarizing plate 5 is mounted in the opening 2A of the frame 2 such that the second movable polarizing plate 5 can be moved horizontally (left and right direction in Figures 1 and 2) with respect to the main polarizing plate unit 3 that is fixedly coupled to the frame 2. The second movable polarizing plate 5 has approximately the same size and shape as the second polarizing section 3B of the main polarizing plate unit 3. In other words, in the first embodiment, the first and second polarizing sections 3A and 3B of the main polarizing plate unit 3 and the first and second movable polarizing plates 4 and 5 have approximately the same size and shape. The second movable polarizing plate 5 is configured and arranged such that the polarization direction of the second movable polarizing plate 5 is substantially the same as the polarization direction of the second polarizing section 3B of the main polarizing plate unit 3 (i.e., the horizontal direction of the sun visor 1 in this example). In this embodiment, the polarization direction of the second movable polarizing plate 5 is preferably identical to the polarization direction. Thus, the second movable polarizing plate 5 passes light that oscillates in the horizontal direction and blocks light that oscillates in the vertical direction.

Although in this embodiment the polarization direction of the first movable polarizing plate 4 is exactly the same as the polarization direction of the first polarizing section 3A of the main polarizing plate unit 3, it is acceptable for these polarizing directions to be slightly different (e.g., up to approximately 5°). Similarly, it is acceptable for the polarization direction of the second movable polarizing plate 5 to be slightly different (e.g., up to approximately 5°) from the polarization direction of the second polarizing section 3B of the main polarizing plate unit 3.

With the present invention, since the first movable polarizing plate 4 and the second movable polarizing plate 5 are provided which can move with respect to the main polarizing plate unit 3 having the first polarizing section 3A and the second polarizing section 3B, the area of the sun visor 1 where light is blocked can be selected by moving the first and second movable polarizing plates 4 and 5 so as to change portions in which the first and second movable polarizing plates 4 and 5 overlap with the first and second polarizing sections 3A and 3B. Moreover, the size of the area of the sun visor 1 where light is blocked can be adjusted by adjusting the length (width) of the overlapping portions between the first and second movable polarizing plates 4 and 5 and the first and second polarizing sections 3A and 3B.

Referring now to Figures 3-16, method of selecting the light-blocking area in the sun visor 1 described above will now be explained.

### FULL TRANSMISSIVE AREA

Figure 3 is a cross sectional view of the sun visor 1 showing a positional relationship of the main polarizing plate unit 3 and the first and second movable polarizing plates 4 and 5 for obtaining a full transmissive area throughout the entire surface of the sun visor 1. In order to achieve a state in which light is transmitted (allowed to pass through) across the entire surface of the sun visor 1, the first movable polarizing plate 4 is moved to be aligned with the left half of the opening 2A of the frame 2 and the second movable polarizing plate 5 is moved to be aligned with the right half of the opening 2A of the frame 2, as shown in Figure 3. In other words, the entirety of the first movable polarizing plate 4 is overlapped with the first polarizing section 3A of the main polarizing plate unit 3 and the entirety of the second movable polarizing plate 5 is overlapped with the second polarizing section 3B of the main polarizing plate unit 3.

As mentioned above, the polarization direction of the first movable polarizing plate 4 is the same as the polarization direction of the first polarizing section 3A of the main polarizing plate unit 3 (e.g., the vertical direction of the sun visor 1) and the polarization direction of the second movable polarizing plate 5 is the same as the polarization direction of the second polarizing section 3B of the main polarizing plate unit 3 (e.g., the horizontal direction of the sun visor 1). Therefore, as seen in the diagram (A) of Figure 4, light P1 incident on the first movable polarizing plate 4 and light P2 incident on the second polarizing section 3B of the main polarizing plate unit 3 are transmitted. (As used herein, "transmitted" means that the portion of the incident light P1 oscillating in the polarization direction of the first movable polarizing plate 4 and the first polarizing section 3A (e.g., the vertical direction of the sun visor 1) is transmitted and the portion of the incident light P1 oscillating in a direction perpendicular to the polarization direction (e.g., the horizontal direction of the sun visor 1) is blocked. Likewise, the portion of the incident light P2 oscillating in the polarization direction of the second movable polarizing plate 5 and the second polarizing section 3B (e.g., the horizontal direction of the sun visor 1) is transmitted and the portion of the incident light P2 oscillating in a direction perpendicular to the polarization direction (e.g., the vertical direction of the sun visor 1) is blocked. The same meaning of "transmitted" applies in the following explanations.)

Consequently, as shown in the diagram (B) of Figure 4, the entire surface S1 of the sun visor 1 becomes a light transmissive area.

### FULL LIGHT-BLOCKING AREA

Figure 5 is a cross sectional view of the sun visor 1 showing a positional relationship of the main polarizing plate unit 3 and the first and second movable polarizing plates 4 and 5 for obtaining a full light-blocking area throughout the entire surface of the sun visor 1. In order to achieve a state in which light is blocked across the entire surface of the sun visor 1, the first movable polarizing plate 4 is moved to be aligned with the right half of the opening 2A of the frame 2 and the second movable polarizing plate 5 is moved to be aligned with the left half of the opening 2A of the frame 2, as shown in Figure 5. In other words, the entirety of the first movable polarizing plate 4 is overlapped with the second polarizing section 3B of the main polarizing plate unit 3 and the entirety of the second movable polarizing plate 5 is overlapped with the first polarizing section 3A of the main polarizing plate unit 3.

As mentioned above, the polarization direction of the first movable polarizing plate 4 (e.g., the vertical direction of the sun visor 1) differs from the polarization direction of the second polarizing section 3B of the main polarizing plate unit 3 (e.g., the horizontal direction of the sun visor 1) by 90° and the polarization direction of the second movable polarizing plate 5 (e.g., the horizontal direction of the sun visor 1) differs from the polarization direction of the first polarizing section 3A of the main polarizing plate unit 3 (e.g., the vertical direction of the sun visor 1). Therefore, as shown in the diagram (A) of Figure 6, light P1 incident on the first polarizing section 3A of the main polarizing plate unit 3 and light P2 incident on the first movable polarizing plate 4 are blocked.

Consequently, as shown in the diagram (B) of Figure 6, the entire surface S1 of the sun visor 1 becomes a light-blocking area.

### LIGHT-BLOCKING AREA ON LEFT SIDE

Figure 7 is a cross sectional view of the sun visor 1 showing a positional relationship of the main polarizing plate unit 3 and the first and second movable polarizing plates 4 and 5 for obtaining a light-blocking area on the left side (as seen in Figure 1) of the sun visor 1. In order to achieve a state in which a light-blocking area is positioned on the left half of the sun visor 1, the first and second movable polarizing plates 4 and 5 are both moved to be aligned with the left half of the opening 2A of the frame 2. In other words, the first and second movable polarizing plates 4 and 5 are moved to overlap with the first polarizing section 3A of the main polarizing plate unit 3 as shown in Figure 7.

As mentioned above, the polarization direction of the second movable polarizing plate 5 (e.g., the horizontal direction of the sun visor 1) differs from the polarization direction of the first polarizing section 3A of the main polarizing plate unit 3 (e.g., the vertical direction of the sun visor 1) by 90°. Therefore, light P1 incident on the first movable polarizing plate 4 is blocked as shown in the diagram (A) of Figure 8. Meanwhile, light P2 incident on the second polarizing section 3B of the main polarizing plate unit 3 is transmitted. More specifically, as mentioned above, the portion of the incident light P2 oscillating in the polarization direction of the second polarizing section 3B (e.g., the horizontal direction of the sun visor 1) is transmitted and the portion of the incident light P2 oscillating in a direction perpendicular to the polarization direction (e.g., the vertical direction of the sun visor 1) is blocked.

Consequently, as shown in the diagram (B) of Figure 8, the left half S1a of the surface S1 of the sun visor 1 becomes a light-blocking area and the right half S1b becomes a light transmissive area.

Moreover, from the state shown in Figure 7, the light-blocking area can be expanded rightward by moving the position of the first movable polarizing plate 4 to the right as shown in Figure 9. Figure 9 is a cross sectional view of the sun visor 1 showing a positional relationship of the main polarizing plate unit 3 and the first and second movable polarizing plates 4 and 5 that is adjusted from the positional relationship shown in Figure 7 to expand the light-blocking area. In this case, light P1 incident on the first movable polarizing plate 4 and light P1' incident of the first polarizing section 3A are blocked as shown in the diagram (A) of Figure 10. Meanwhile, light P2 incident on the second polarizing section 3B of the main polarizing plate unit 3 is transmitted. The size of the light-blocking area in the sun visor 1 can be adjusted between a state with the light-blocking area on the left side as shown in Figure 7 and a state with full light-blocking area as shown in Figure 5 by moving the first movable polarizing plate 4.

Consequently, as shown in the diagram (B) of Figure 10, the light is blocked in the area S1a', which is bigger than the left half S1a as shown in the diagram (B) of Figure 8.

### LIGHT-BLOCKING AREA ON RIGHT SIDE

Figure 11 is a cross sectional view of the sun visor 1 showing a positional relationship of the main polarizing plate unit 3 and the first and second movable polarizing plates 4 and 5 for obtaining a light-blocking area on the right side (as seen in Figure 1) of the sun visor 1. In order to achieve a state in which a light-blocking area is positioned on the right half of the sun visor 1, the first and second movable polarizing plates 4 and 5 are both moved to be aligned with the right half of the opening 2A of the frame 2. In other words, the first and second movable polarizing plates 4 and 5 are both moved to overlap with the second polarizing section 3B of the main polarizing plate unit 3 as shown in Figure 11.

As mentioned above, the polarization direction of the first movable polarizing plate 4 (e.g., the vertical direction of the sun visor 1) differs from the polarization direction of the second polarizing section 3B of the main polarizing plate unit 3 (e.g., the horizontal direction of the sun visor 1) by 90°. Therefore, light P2 incident on the first movable polarizing plate 4 is blocked. On the other hand, light P1 incident on the first polarizing section 3A of the main polarizing plate unit 3 is transmitted as shown in the diagram (A) of Figure 12. More specifically, as mentioned above, the portion of the incident light P1 oscillating in the polarization direction of the first polarizing section 3A is transmitted and the portion of the incident light oscillating in a direction perpendicular to the polarization direction of the first polarizing section 3A is blocked.

Consequently, as shown in the diagram (B) of Figure 12, the left half S1a of the sun visor 1 becomes a light transmissive area and the right half S1b becomes a light-blocking area.

Moreover, from the state shown in Figure 11, the light-blocking area can be expanded leftward by moving the position of the second movable polarizing plate 5 to the left as shown in Figure 13. Figure 13 is a cross sectional view of the sun visor 1 showing a positional relationship of the main polarizing plate unit 3 and the first and second movable polarizing plates 4 and 5 that is adjusted from the positional relationship shown in Figure 11 for expanding the light-blocking area. The size of the light-blocking area in the sun visor 1 can be adjusted between a state with the light-blocking area on the right side as shown in Figure 11 and a state with full light-blocking area as shown in Figure 5 by moving the second movable polarizing plate 5.

### LIGHT-BLOCKING AREA IN MIDDLE PORTION

Figure 14 is a cross sectional view of the sun visor 1 showing a positional relationship of the main polarizing plate unit 3 and the first and second movable polarizing plates 4 and 5 for obtaining a light-blocking area in the middle portion of the sun visor 1. In order to achieve a state in which a light-blocking area is positioned in a middle portion of the sun visor 1, the first and second movable polarizing plates 4 and 5 are moved to positions in a middle portion of the opening 2A, as shown in Figure 14.

As mentioned above, the polarization direction of the first movable polarizing plate 4 (e.g., the vertical direction of the sun visor 1) differs from the polarization direction of the second polarizing section 3B of the main polarizing plate unit 3 (e.g., the horizontal direction of the sun visor 1) by 90° and the polarization direction of the second movable polarizing plate 5 (e.g., the horizontal direction of the sun visor 1) differs from the polarization direction of the first polarizing section 3A of the main polarizing plate unit 3 (e.g., the vertical direction of the sun visor 1) by 90°. Therefore, as shown in Figure 14 and the diagram (A) of Figure 15, light P3 incident on an area corresponding to a rightward portion of the first polarizing section 3A where it overlaps with the second movable polarizing plate 5 and light P4 incident on an area corresponding to a leftward portion of the second polarizing section 3B where it overlaps with the first movable polarizing plate 4 are blocked. Meanwhile, light P5 incident on an area corresponding to a leftward portion of the first polarizing section 3A of the main polarizing plate unit 3 and light P6 incident on an area corresponding to a rightward portion of the second polarizing section 3B of the main polarizing plate unit 3 are transmitted.

Consequently, as shown in the diagram (B) of Figure 15, a middle portion S1c of the sun visor 1 becomes a light-blocking area and side portions S1d and S1e on both sides of the middle portion S1c become light transmissive areas.

Moreover, as shown in Figure 16, the width W of the light-blocking area can be changed (expanded or shrunk) and the position of the light-blocking area can be moved by moving the first and second movable polarizing plates 4 and 5 in left and right direction.

With the sun visor 1 in accordance with the first embodiment of the present invention, the first and second movable polarizing plates 4 and 5 are arranged to sandwich the main polarizing plate unit 3 therebetween. The first movable polarizing plate 4 and the second movable polarizing plate 5 can be moved by extending one's hand to the front side or the back side of the aligned polarizing plate unit 3. Thus, when one of the first and second movable polarizing plates 4 and 5 is being moved, the other one of the first and second movable polarizing plates 4 and 5 (i.e., the one not being moved) does not impede or interfere with the movement of the one of the first and second movable polarizing plates 4 and 5 that is being moved.

Alternatively, a pair of operating levers R1 and R2 can be provided on the first and second movable polarizing plates 4 and 5, respectively, as shown in the diagrams (A) to (D) of Figures 19 in order to make it easier to operate the first and second movable polarizing plates 4 and 5. In such case too, the first operating lever R1 of the first movable polarizing plate 4 and the second operating lever R2 of the second movable polarizing plate 5 do not interfere with (contact) each other when the first and second movable polarizing plates 4 and 5 are moved. If the first and second movable polarizing plates 4 and 5 are arranged on the same side of the main polarizing plate unit 3, then the first movable polarizing plate 4 may contact the lever 2 as shown in Figure 20.

As described previously, with the present invention, the light-blocking area can be selected and the width of the light-blocking area can be adjusted by moving (changing the positions of) the first and second movable polarizing plates 4 and 5.

Moreover, the first movable polarizing plate 4 has substantially the same size and the same shape as the first polarizing section 3A of the main polarizing plate unit 3. Consequently, light that oscillates in the polarization direction of the first movable polarizing plate 4 and the first polarizing section 3A can be transmitted across the entire surface of the first polarizing section 3A and the first movable polarizing plate 4 when the first polarizing section 3A and the first movable polarizing plate 4 are entirely overlapping each other.

Similarly, the second movable polarizing plate 5 has substantially the same size and the same shape as the second polarizing section 3B of the main polarizing plate unit 3. Consequently, light that oscillates in the polarization direction of the second movable polarizing plate 5 and the second polarizing section 3B can be transmitted across the entire surface of the second polarizing section 3B and the second movable polarizing plate 5 when the second polarizing section 3B and the second movable polarizing plate 5 are entirely overlapping each other.

Additionally, the first polarizing section 3A and the second polarizing section 3B of the main polarizing plate unit 3 have substantially the same size and shape. Therefore, both the transmission and the blocking of light can be accomplished over the entire surface of the main polarizing plate unit 3.

Referring now to Figures 17 and 18, a modified structure of the sun visor 10 in accordance with the first embodiment will be explained. In the sun visor 10 with the modified structure, transparent reinforcing plates 13A, 13B, 14 and 15 have been added. The transparent reinforcing plate 13A (first transparent reinforcing plate) is adhesively attached to a rearward side (top side in Figure 17) of the first polarizing section 3A of the main polarizing plate unit 3 that faces in the direction of the first movable polarizing plate 4. The transparent reinforcing plate 13B (second transparent reinforcing plate) is adhesively attached to the frontward side (bottom side in Figure 17) of the second polarizing section 3B of the main polarizing plate unit 3 that faces in the direction of the second movable polarizing plate 5. The transparent reinforcing plate 14 (third transparent reinforcing plate) is adhesively attached to an outward side (top side in Figure 17) of the first movable polarizing plate 4 that faces away from the main polarizing plate unit 3. The transparent reinforcing plate 15 (fourth transparent reinforcing plate) is adhesively attached to an outward side bottom side in Figure 17) of the second movable polarizing plate 5 that faces away from the main polarizing plate unit 3.

With the modified structure of the sun visor 10, a reinforcing plate does not exist between the first movable polarizing plate 4 and the second polarizing section 3B or between the second movable polarizing plate 5 and the first polarizing section 3A when light is being blocked by the first movable polarizing plate 4 and the second polarizing section 3B or by the second movable polarizing plate 5 and the second polarizing section 3B. Consequently, the light can be blocked reliably.

If a reinforcing plate were disposed between the first movable polarizing plate 4 and the second polarizing section 3B or between the second movable polarizing plate 5 and the first polarizing section 3A, then, for example, the horizontally polarized light exiting the second movable polarizing plate 5 might be scattered by the reinforcing plate, thereby causing vertically oscillating light to strike the first polarizing section 3A. Since vertically oscillating light passes through the first polarizing section 3A, the sun visor would not be able to reliably block the light.

### SECOND EMBODIMENT

Referring now to Figures 21 to 35, a light blocking device in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In the second embodiment, the light blocking device is applied to a sunroof unit 100 of a vehicle. Figure 21 shows a vehicle body 101 of the vehicle or automobile provided with the sunroof unit 100. The vehicle body 101 has a passenger compartment 102 and a ceiling support frame 104 provided around the perimeter of the ceiling side of the passenger compartment 102.

As shown in Figures 21 and 22, the ceiling support frame 104 comprises a pair of left and right roof side rails 105, a front side rail 106 connected to the front ends (longitudinally frontward ends) of the left and right roof side rails 105, and a rear side rail 107 connected to the rear ends (longitudinally rearward ends) of the left and right roof side rails 105. A roof panel 108 is mounted to the ceiling support frame 104. As shown in Figures 21 to 23, a sunroof window opening 109 is provided in the roof panel 108.

Figure 23 is a cross sectional view of the roof portion of the vehicle taken along a section line 23-23 of Figure 21 illustrating a portion where a main polarizing window plate unit (main polarizing plate unit) 110 is secured (fixed) to the roof panel 108. As shown in Figure 23, the main polarizing window plate unit 110 is fixed into the sunroof window opening 109. As shown in Figures 21 and 22, a first polarizing section 110a is provided on a frontward portion of the main polarizing window plate unit 110 and a second polarizing section 110b is provided on a rearward portion of the main polarizing window plate unit 110.

The first polarizing section 110a is preferably positioned over the front seat (not shown) of the vehicle and the second polarizing section 110b is preferably positioned over the rear seat (not shown). The first and second polarizing sections 110a and 110b can be made by applying a coating (polarizing layer, i.e., polarizing film) for light polarization onto a sheet of transparent glass or transparent resin. The first and second polarizing sections 110a and 110b are arranged such that the polarization direction of the first polarizing section 110a differs from the polarization direction of the second polarizing section 110b by 90°. The first and second polarizing sections 110a and 110b are aligned to the front and rear of each other (i.e., an alignment direction is front to rear direction of the vehicle) with respect to the sunroof window opening 109 of the roof panel 108 as seen in Figures 21 and 22.

For example, the first polarizing section 110a is arranged such that the polarization direction of the first polarizing section 110a is the lengthwise direction with respect to the vehicle in Figure 21. Therefore, the first polarizing section 110a passes light that oscillates in the longitudinal direction of the vehicle and blocks light that oscillates in the widthwise direction of the vehicle. In such case, the second polarizing section 110b is arranged such that the polarization direction of the second polarizing section 110b is the widthwise direction with respect to the vehicle in Figure 21. Therefore, the second polarizing section 110b passes light that oscillates in the widthwise direction and blocks light that oscillates in the lengthwise direction. The border between the first polarizing section 110a and the second polarizing section 110b is positioned approximately at the midpoint along the longitudinal length of the main polarizing window plate unit 110 as shown in Figures 21 and 22. Thus, the first polarizing section 110a and the second polarizing section 110b of the main polarizing window plate unit 110 are approximately the same size and have generally the same shape.

As shown in Figure 23, first and second rail frames 111 and 112 for supporting first and second movable polarizing window plates 113 and 114, respectively, are mounted to the ceiling support frame 104 below the main polarizing window plate unit 110. The first and second rail frames 111 and 112 are arranged above and below each other in an overlapping fashion as shown in Figures 23 to 25. As shown in Figure 23, left and right guide rails 111a are formed on both transversely facing sides (left and right sides in the widthwise direction of the vehicle) of the first rail frame 111 and left and right guide rails 112a are formed on both transversely facing sides (left and right sides in the widthwise direction of the vehicle) of the second rail frame 112.

The first movable polarizing window plate (movable polarizing plate) 113 is supported at both transversely facing side portions thereof on the left and right guide rails 111a such that it can move freely in the longitudinal direction of the vehicle. The first movable polarizing window plate 113 has a polarization direction that is substantially the same as the polarization direction of the first polarizing section 110a of the main polarizing window plate unit 110. More specifically, the first movable polarizing window plate 113 is configured to block the transmission of light that oscillates in the widthwise direction of the vehicle. The second movable polarizing window plate (movable polarizing plate) 114 is supported at both transversely facing side portions thereof on the left and right guide rails 112a such that it can move freely in the longitudinal direction of the vehicle. The second movable polarizing window plate 114 has a polarization direction that is substantially the same as the polarization direction of the second polarizing section 110b of the main polarizing window plate unit 110. More specifically, the second movable polarizing window plate 114 is configured to block the transmission of light that oscillates in the lengthwise direction of the vehicle. The first movable polarizing window plate 113 and the second movable polarizing window plate 114 are arranged in different positions along the direction perpendicular to the planes thereof (i.e., the vertical direction of the vehicle) such that each can be moved independently with respect to the main polarizing window plate unit 110 without interfering with each other. In this embodiment, both of the first and second movable polarizing window plates 113 and 114 are arranged below (on the same side of) the main polarizing window plate unit 110 as seen in Figure 23.

Although not shown in Figure 23, guide rollers are preferably mounted to the transversely facing side portions of the first and second movable polarizing window plates 113 and 114. The first and second movable polarizing window plates 113 and 114 are supported on the guide rails 111a and 112a, respectively, with the guide rollers such that the first and second movable polarizing window plates 113 and 114 do not vibrate or otherwise move in the vertical direction.

Figure 24 is a schematic front perspective view of the roof portion of the vehicle shown in Figures 21 and 22 in a state in which the roof panel 108 and the main polarizing window plate unit 110 are removed for the illustration purpose.

As shown in Figures 25 and 26, a rear support part 111b is provided on the longitudinally rearward end of the first rail frame 111. Similarly, a rear support part (not shown) is provided on the rearward end of the second rail frame 112. As shown in Figure 25, a drive motor 115 is mounted to the rear support part 111b of the first rail frame 111 and a drive motor 116 is mounted to the rear support part of the second rail frame 112. As shown in Figure 27, a drive gear 115a is arranged to be driven by the drive motor 115 and a drive gear 116a is arranged to be driven by the drive motor 116. Each of the drive motors 115 and 116 can be driven by turning a switch (not shown) forward and backward.

As shown in Figure 27, the drive gear 115a meshes with drive wires 115b and 115c that are coupled to both transverse sides of the first movable polarizing window plate 113. More specifically, one end of each of the drive wires 115b and 115c is attached to one of two brackets 113a provided on opposite side portions of the first movable polarizing window plate 113 and the other end of each of the drive wires 115b and 115c is free. Additionally, guide parts (not shown) that extend along the guide rails 111a are provided such that the other ends of the drive wires 115b and 115c that are free can move back and forth in the longitudinal direction of the vehicle.

When the drive motor 115 rotates the drive gear 115a forward or backward, the drive wires 115b and 115c are moved forward or backward along the lengthwise direction and, as indicated with the arrows 17 and 18 in Figure 28, the first movable polarizing window plate 113 is moved forward or backward along the longitudinal direction of the vehicle. Since a conventional technology can be used for moving the first movable polarizing window plate 113, the details of the relationship between the drive gear 115a and the drive wires 115b and 115c are omitted in the drawings.

Similarly, as shown in Figure 27, the drive gear 116a meshes with drive wires 116b and 116c that are coupled to both transverse sides of the second movable polarizing window plate 114. One end of each of the drive wires 116b and 116c is attached to one of two brackets 114a provided on opposite side portions of the second movable polarizing window plate 114 and the other end of each of the drive wires 116b and 116c is free. Additionally, guide parts (not shown) that extend along the guide rails 112a are provided such that the other ends of the drive wires 116b and 116c can move back and forth in the longitudinal direction of the vehicle.

When the drive motor 116 rotates the drive gear 116a forward or backward, the drive wires 116b and 116c are moved forward or backward along the lengthwise direction and, as indicated with the arrows 19 and 20 in Figure 28, the second movable polarizing window plate 114 is moved forward or backward along the longitudinal direction of the vehicle. Since a conventional technology can be used for moving the second movable polarizing window plate 114, the details of the relationship between the drive gear 116a and the drive wires 116b and 116c are omitted in the drawings.

Together, the left and right roof side rails 105, the front side rail 106, the rear side rail 107, the main polarizing window plate unit 110, the first and second rail frames 111 and 112, the first and second drive motors 115 and 116, the drive gears 115a and 116a, the drive wires 115b and 115c and 116b and 116c, and the first and second movable polarizing window plates 113 and 114 preferably constitute the sunroof unit 100 of the present invention. Meanwhile, the main polarizing window plate unit 110 and the first and second movable polarizing window plates 113 and 114 preferably constitute the light blocking device.

Referring now to Figures 29 to 35, the operation of the sunroof unit 100 described above will now be explained. First, an explanation will be given on making the entire area of the sunroof window opening 109 to be fully light transmitting. Then, an explanation will be given on making the entire area of the sunroof window opening 109 to be fully light blocking. Finally, explanations will be given on making a first part of the sunroof window opening 109 to be light blocking and a second part to be light transmitting; i.e., one of the front and rear portions of the sunroof window opening 109 being light transmitting and the other of the front and rear portions of the sunroof window opening 109 being light blocking, or light blocking a middle portion of the sunroof window opening 109.

### FULL TRANSMISSIVE AREA

Figure 29 includes a diagram (A) illustrating a schematic side view of the vehicle with a positional relationship of the first and second movable polarizing window plates 113 and 114 with respect to the main polarizing window plate unit 110 for allowing the light to transmit through the entire sunroof window opening 109, and a diagram (B) for showing the light transmissive area of the sunroof window opening 109 corresponding to a state of the sunroof unit 100 illustrated in the diagram (A) in accordance with the second embodiment of the present invention.

In order to achieve a state in which light is transmitted (allowed to pass through) across the entire sunroof window opening 109, the first movable polarizing window plate 113 is moved to the forward side of the sunroof window opening 109 and the second movable polarizing window plate 114 is moved to the rearward side of the sunroof window opening 109 as shown in the diagram (A) of Figure 29. In other words, the first movable polarizing window plate 113 is positioned such that it overlaps with the first polarizing section 110a of the main polarizing window plate unit 110 and the second movable polarizing window plate 114 is positioned such that it overlaps with the second polarizing section 110b of the main polarizing window plate unit 110.

Since the polarization direction of the first movable polarizing window plate 113 is the same as the polarization direction of the first polarizing section 110a (e.g., the longitudinal direction of the vehicle) and the polarization direction of the second movable polarizing window plate 114 is the same as the polarization direction of the second polarizing section 110b (e.g., the widthwise direction of vehicle), the light incident on both first and second polarizing sections 110a and 110b of the main polarizing window plate unit 110 is transmitted. (As used herein, "transmitted" means that the portion of the light incident on each of the first and second polarizing sections 110a and 110b that oscillates in the polarization direction of the respective one of the first and second polarizing section 110a and 110b is transmitted and the portion of the incident light oscillating in a direction perpendicular to the respective polarization direction is blocked. The same meaning of "transmitted" applies in the explanations that follow.)

Consequently, as shown in the diagram (B) of Figure 29, the entire area T1 of the sunroof window opening 109 becomes a light transmissive area.

### FULL LIGHT-BLOCKING AREA

Figure 30 includes a diagram (A) illustrating a schematic side view of the vehicle with a positional relationship of the first and second movable polarizing window plates 113 and 114 with respect to the main polarizing window plate unit 110 for blocking the light in the entire sunroof window opening 109, and a diagram (B) for showing the light transmissive area of the sunroof window opening 109 corresponding to a state of the sunroof unit 100 illustrated in the diagram (A) in accordance with the second embodiment of the present invention;

In order to achieve a state in which light is blocked (not allowed to pass through) across the entire sunroof window opening 109, the second movable polarizing window plate 114 is moved to the forward side of the sunroof window opening 109 and the first movable polarizing window plate 113 is moved to the rearward side of the sunroof window opening 109, as shown in the diagram (A) of Figure 30. In other words, the first movable polarizing window plate 113 is positioned such that it overlaps with the second polarizing section 110b of the main polarizing window plate unit 110 and the second movable polarizing window plate 114 is positioned such that it overlaps with the first polarizing section 110a of the main polarizing window plate unit 110.

Since the polarization direction of the first movable polarizing window plate 113 differs from the polarization direction of the second polarizing section 110b by 90° and the polarization direction of the second movable polarizing window plate 114 differs from the polarization direction of the first polarizing section 110a by 90°, the light incident on both first and second polarizing sections 110a and 110b of the main polarizing window plate unit 110 is blocked.

Consequently, as shown in the diagram (B) of Figure 30, the entire area T1 of the sunroof window opening 109 becomes a light-blocking area.

### LIGHT-BLOCKING AREA ON FRONTWARD SIDE

Figure 31 includes a diagram (A) illustrating a schematic side view of the vehicle with a positional relationship of the movable polarizing window plates with respect to the polarizing window plate when the frontward side of the sunroof window opening 109 is made into the light-blocking area, and a diagram (B) for showing the light transmissive area of the sunroof window opening 109 corresponding to a state of the sunroof unit 100 illustrated in the diagram (A) in accordance with the second embodiment of the present invention.

In order to achieve a state in which a light-blocking area is positioned on the frontward half of the sunroof window opening 109, both of the first and second movable polarizing window plates 113 and 114 are moved to the frontward side of the sunroof window opening 109 as shown in the diagram (A) of Figure 31. In other words, the first movable polarizing window plate 113 and the second movable polarizing window plate 114 are both positioned such that they overlap with the first polarizing section 110a of the main polarizing window plate unit 110.

Since the polarization direction of the first movable polarizing window plate 113 differs from the polarization direction of the second movable polarizing window plate 114 by 90°, the light incident on the first polarizing section 110a of the main polarizing window plate unit 110 is blocked.

Consequently, as shown in the diagram (B) of Figure 31, the frontward half T1a of the sunroof window opening 109 becomes a light-blocking area and the rearward half T1b of the sunroof window opening 109 becomes a light transmissive area.

Since the polarization directions of the first movable polarizing window plate 113 and the second polarizing section 110b differ by 90° and the polarization directions of the second movable polarizing window plate 114 and the first polarizing section 110a differ by 90°, the light-blocking area can be expanded rearward by moving the first movable polarizing window plate 113 rearward from the position shown in the diagram (A) of Figure 31.

### LIGHT-BLOCKING AREA ON REARWARD SIDE

Figure 32 includes a diagram (A) illustrating a schematic side view of the vehicle with a positional relationship of the first and second movable polarizing window plates 113 and 114 with respect to the main polarizing window plate unit 110 when the rearward side of the sunroof window opening 109 is made into the light-blocking area, and a diagram (B) for showing the light transmissive area of the sunroof window opening 109 corresponding to a state of the sunroof unit 100 illustrated in the diagram (A) in accordance with the second embodiment of the present invention;

In order to achieve a state in which a light-blocking area is positioned on the rearward half of the sunroof window opening 109, both of the first and second movable polarizing window plates 113 and 114 are moved to the rearward side of the sunroof window opening 109 as shown in the diagram (A) of Figure 32. In other words, the first movable polarizing window plate 113 and the second movable polarizing window plate 114 are both positioned such that they overlap with the second polarizing section 110b of the main polarizing window plate unit 110.

Since the polarization direction of the first movable polarizing window plate 113 differs from the polarization direction of the second movable polarizing window plate 114 by 90°, the light incident on the second polarizing section 110b of the main polarizing window plate unit 110 is blocked.

Consequently, as shown in the diagram (B) of Figure 32, the rearward half T1b of the sunroof window opening 109 becomes a light-blocking area and the frontward half T1a of the sunroof window opening 109 becomes a light transmissive area.

When the first and second movable polarizing window plates 113 and 114 are both moved rearward, the head clearance Hd can be increased as shown in Figure 35.

Since the polarization directions of the first movable polarizing window plate 113 and the second polarizing section 110b differ by 90° and the polarization directions of the second movable polarizing window plate 114 and the first polarizing section 110a differ by 90°, the light-blocking area can be expanded frontward as shown in the diagram (B) of Figure 33 by moving the second movable polarizing window plate 114 frontward as shown in the diagram (A) of Figure 33.

### LIGHT-BLOCKING AREA IN MIDDLE PORTION

Figure 34 includes a diagram (A) illustrating a schematic side view of the vehicle with a positional relationship of the first and second movable polarizing window plates 113 and 114 with respect to the main polarizing window plate unit 110 when the middle portion of the sunroof window opening 109 is made into the light-blocking area, and a diagram (B) for showing the light transmissive area of the sunroof window opening 109 corresponding to a state of the sunroof unit 100 illustrated in the diagram (A) in accordance with the second embodiment of the present invention.

In order to achieve a state in which a light-blocking area is positioned in a middle portion of the sunroof window opening 109, both of the first and second movable polarizing window plates 113 and 114 are moved to the middle portion of the sunroof window opening 109 as shown in the diagram (A) of Figure 34.

Since the polarization direction of the first movable polarizing window plate 113 differs from the polarization direction of the second polarizing section 110b of the main polarizing window plate unit 110 by 90° and the polarization direction of the second movable polarizing window plate 114 differs from the polarization direction of the first polarizing section 110a of the main polarizing window plate unit 110 by 90°, light incident on a rearward portion of the first polarizing section 110a and light incident on a frontward portion of the second polarizing section 110b are blocked.

Consequently, as shown in the diagram (B) of Figure 34, the middle portion T1c of the sunroof window opening 109 becomes a light-blocking area.

Since the polarization directions of the first movable polarizing window plate 113 and the second polarizing section 110b differ by 90° and the polarization directions of the second movable polarizing window plate 114 and the first polarizing section 110a differ by 90°, the longitudinal dimension L of the light-blocking area in the middle portion T1c of the sunroof window opening 109 can be adjusted by moving the first and second movable polarizing window plates 113 and 114 frontward and rearward.

By moving the first and second movable polarizing window plates 113 and 114 as described above, the light-blocking area can be selected and the size (the dimension L in the longitudinal direction of the vehicle) of the light-blocking area can be adjusted.

When the main polarizing window plate unit 110 and the first movable polarizing window plate 113 and 114 are made of a transparent glass sheet or transparent resin sheet having a polarizing film applied thereto, effects that are similar to those obtained with the second embodiment can be obtained by forming the respective polarizing film on the bottom surface of the main polarizing window plate unit 110 and on the top surfaces of the first and second movable polarizing window plates 113 and 114.

Since both of the first and second movable polarizing window plates 113 and 114 are arranged on the same side of the main polarizing window plate unit 110, it is easy to arranged the guide rails 111a and 112a of the first and second rail frames 111 and 112, respectively, and the drive motors 115 and 116 even if the sunroof unit 1 is used as the boundary between the inside and the outside of the vehicle.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiments, the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application No. 2005-312262, the entire contents of which are incorporated herein by reference.

## Claims

1. An apparatus for controlling light transmission comprising:
first main polarizing means for polarizing light in a first polarizing direction;
second main polarizing means for polarizing light in a second polarizing direction different from the first polarizing direction, the second main polarizing means being disposed laterally with respect to the first main polarizing means;
first movable polarizing means for selectively transmitting the light when overlapping the first main polarizing means and blocking the light when overlapping the second main polarizing means; and
second movable polarizing means for selectively transmitting the light when overlapping the second main polarizing means and blocking the light when overlapping the first main polarizing means while moving independently of the first movable polarizing means.

2. An apparatus as claimed in claim 1 comprising:
a polarizing plate unit including a first polarizing section with a first polarization direction and a second polarizing section with a second polarization direction different from the first polarization direction, the first and second polarizing sections being disposed laterally with respect to each other in an alignment direction;
a first movable polarizing plate movably disposed in the alignment direction to selectively overlap the first and second polarizing sections, the first movable polarizing plate having a polarization direction that is substantially identical to the first polarization direction; and
a second movable polarizing plate movably disposed in the alignment direction to selectively overlap the first movable polarizing plate, the second movable polarizing plate having a polarization direction that is substantially identical to the second polarization direction.

3. An apparatus as claimed in claim 2 wherein the polarization direction of the first movable polarizing plate is identical to the first polarization direction of the first polarizing section of the polarizing plate unit.

4. An apparatus as claimed in claim 2 or claim 3 wherein the second movable polarizing plate is identical to the second polarization direction of the second polarizing section of the polarizing plate unit.

5. An apparatus as claimed in any of claims 2 to 4 wherein the first movable polarizing plate is substantially identical in size and shape as the first polarizing section of the polarizing plate unit and/or wherein the second movable polarizing plate is substantially identical in size and shape as the second polarizing section of the polarizing plate unit.

6. An apparatus as claimed in any of claims 2 to 5 wherein the first and second movable polarizing plates are disposed on opposite sides of the polarizing plate unit.

7. An apparatus as claimed in any of claims 2 to 6 wherein the first movable polarizing plate has a first operating lever attached thereto, and the second movable polarizing plate has a second operating lever attached thereto.

8. An apparatus as claimed in any of claims 2 to 7 wherein the first and second movable polarizing plates are disposed on a single side of the polarizing plate unit.

9. An apparatus as claimed in any of claims 2 to 8 wherein the first polarizing section of the polarizing plate unit has a first transparent reinforcing plate adhesively attached thereto, the second polarizing section of the polarizing plate unit has a second transparent reinforcing plate adhesively attached thereto, the first movable polarizing plate has a third transparent reinforcing plate adhesively attached thereto, and the second movable polarizing plate has a fourth transparent reinforcing plate adhesively attached thereto.

10. An apparatus as claimed in claim 9 wherein the second and third transparent reinforcing plates are arranged such that the first movable polarizing plate and the second polarizing section of the polarizing plate unit face each other without the second and third transparent reinforcing plates being disposed therebetween, and the first and fourth transparent reinforcing plates are arranged such that the second movable polarizing plate and the first polarizing section of the polarizing plate unit face each other without the first and fourth transparent reinforcing plates being disposed therebetween.

11. A sun visor for a vehicle comprising an apparatus as claimed in any of claims 2 to 10 wherein the polarizing plate unit is disposed within an opening of a frame of the sun visor.

12. A sun roof or roof panel for a vehicle having a sunroof window opening and comprising an apparatus as claimed in any of claims 2 to 10 wherein the polarizing plate unit is disposed within the sunroof window opening.

13. A light-blocking position selecting method comprising:
providing an polarizing plate unit including a first polarizing section with a first polarization direction and a second polarizing section with a second polarization direction that is different from the first polarization direction with the first and second polarizing sections being disposed laterally with respect to each other in an alignment direction;
movably disposing a first movable polarizing plate in the alignment direction to selectively overlap the first and second polarizing sections, the first movable polarizing plate having a polarization direction that is substantially identical to the first polarization direction;
movably disposing a second movable polarizing plate in the alignment direction to selectively overlap the first movable polarizing plate, the second movable polarizing plate having a polarization direction that is substantially identical to the second polarization direction; and
changing an overlapping state of the polarizing plate unit, the first movable polarizing plate and the second movable polarizing plate by moving the first movable polarizing plate and the second movable polarizing plate.

14. A vehicle having an apparatus, a sun visor, a sun roof or a roof panel as claimed in any of claims 1 to 12.
